# EUROPÄISCHE PATENTSCHRIFT

(11) **EP 0 707 535 B1**
(45) Veröffentlichungstag und Bekanntmachung des Hinweises auf die Patenterteilung: **27.12.1996**
(21) Anmeldenummer: 95903280.6
(22) Anmeldetag: 25.11.1994
(51) Int. Cl.: B29C 67/00, B23P 15/24

(54) **VERFAHREN UND VORRICHTUNG ZUR ERZEUGUNG EINES WERKSTÜCKS**
PROCESS AND DEVICE FOR CREATING A WORKPIECE
PROCEDE ET DISPOSITIF UTILISES POUR REALISER UNE PIECE

(30) Priorität: 30.11.1993 DE 4340646
(43) Veröffentlichungstag der Anmeldung: 24.04.1996
(73) Patentinhaber: MEC MASCHINENBAU ENTWICKLUNG CONSULTING GMBH, D-52477 Alsdorf (DE)
(72) Erfinder: SALM, Thomas, Dr., D-52074 Aachen (DE)
(74) Vertreter: Klein, Friedrich
(86) Internationale Anmeldenummer: EP9403902
(87) Internationale Veröffentlichungsnummer: WO9515254

(56) Entgegenhaltungen:
- EP-A- 0 369 909
- EP-A- 0 490 546
- DE-A- 3 711 470
- US-A- 5 031 483
- US-A- 5 071 503

## Beschreibung

Die Erfindung betrifft ein Verfahren zur Erzeugung eines als Prototyp dienenden Werkstückes entsprechend dem Oberbegriff des Patentanspruches 1. Die Erfindung betrifft ferner eine Vorrichtung zur Durchführung dieses Verfahrens.

Die DE-A-3711470 zeigt ein Verfahren zum Herstellen eines dreidimensionalen, aus einer Vielzahl von Scheiben zusammengesetzten Modells, beispielsweise eines Fahrzeug-modells, wobei die Modellform von einem Rechner in Scheiben eingeteilt wird, die sodann als Scheibenrohlinge aus einem geeigneten Plattenwerkstoff mittels Laserstrahl herausgeschnitten und unter Verwendung von beispielsweise Fixierstäben zu einem Grobkonturenmodell zusammengefügt werden, das anschließend von Hand oder mittels Laserstrahlen geglättet wird. Mit diesem Verfahren läßt sich zwar die Kontur eines Modells in Schichtbauweise herstellen, jedoch weisen die Scheibenrohlinge dabei eine einheitliche Dicke auf, die zur Erzielung der gewünschten Modellform lediglich an ihren Randzonen einer Konturenbearbeitung unterzogen werden.

Auch die EP-A-0 490 546 zeigt ein Verfahren zum Herstellen eines dreidimensionalen, aus einer Vielzahl von relativ dünnen Platten zusammengesetzten Gegenstandes, wobei die einzelnen Platten nach Art eines Stanzvorganges aus einem bandförmigen Material ausgestanzt und zur Bildung des Gegenstandes aufeinander gestapelt werden. Die am fertigen Gegenstand einander benachbarten Flächen der Platten werden vor dem Stapelvorgang mit einem Klebemittel, wie beispielsweise Wachs oder einem anderen adhesiven Material, beaufschlagt, um hierdurch ihre die Kontur des Gegenstandes bildende Relativlage zu sichern.
Mit diesem Verfahren lassen sich sowohl zylindrische Hohlkörper mit unterschiedlichen Durchmesserbereichen, als auch eine sonstige geometrische Form aufweisende Körper kostengünstig in Schichtbauweise herstellen, jedoch ist die Anwendung dieses Verfahrens auf die Herstellung von Gegenständen beschränkt, die nach dem Stapeln der einzelnen Platten keiner spanenden Bearbeitung mehr unterzogen werden.

Ein hierzu ähnliches Verfahren, sowie eine Vorrichtung zur Durchführung dieses Verfahrens, ist in der EP-A-0369909 beschrieben. Hier werden die Geometriedaten des herzustellenden Modells in einen Computer gegeben, der aus diesen die Fertigungsdaten von einzelnen das Modell bildenden Scheiben festlegt, die dann zur Steuerung der Arbeitsbewegungen eines die Konturen der einzelnen Scheiben herstellenden Werkzeuges, beispielsweise eines Fräswerkzeuges einer 2-D oder einer 3-D Bearbeitungsmaschine dienen.

Auch die US-A-5071503 zeigt ein Verfahren und eine zu dessen Durchführung dienende Vorrichtung zur Herstellung eines in Schichtbauweise zu bildenden Werkstückes. Dieses wird von einer Vielzahl von Platten gleicher Dicke gebildet, wobei jede der Platten vor ihrer der Konturenbildung dienenden spanabhebenden Bearbeitung durch das Werkzeug einer 3-D Bearbeitungsmaschine mit der ihr am fertigen Werkstück benachbarten und somit schon fertig bearbeiteten Platte verbunden wird, um ihrerseits nach dem Verbindungsvorgang konturiert zu werden.

Schließlich ist auch aus der zur Bildung des Oberbegriffes des Patentanspruches 1 herangezogenen US-A-5031483 ein Verfahren und auch eine zu dessen Durchführung dienende Vorrichtung zur Herstellung einer aus einem Ober- und einem Unterteil gebildeten Spritz- oder Gießform bekannt. Sowohl das Unter- als auch das Oberteil dieser Form besteht aus einer Vielzahl von aufeinander gestapelten Platten, wobei jede der Platten zur Erzielung ihrer Kontur mittels eines entsprechenden Werkzeuges spanabhebend bearbeitet wird. Auch werden die Arbeitsbewegungen des Werkzeuges von einem Computer gesteuert, der aus den Geometriedaten sowohl des Ober- als auch des Unterteils der herzustellenden Form die Daten der Konturen der einzelnen Platten festlegt, die dann zur Steuerung des Bearbeitungswerkzeuges herangezogen werden.
Im Gegensatz zu der Vorgehensweise bei dem Verfahren gemäß US-A-5071503, bei dem jeweils eine noch unbearbeitete Platte mit der ihr am fertigen Werkstück benachbarten, schon fertig bearbeiteten Platte verbunden wird, werden bei diesem Verfahren zunächst alle Platten fertig bearbeitet und erst dann zur Bildung des Ober- bzw des Unterteils der Form miteinander verbunden.

Bei all diesen vorbekannten Verfahren wird das herzustellende Werkstück in eine Vielzahl von Platten einheitlicher Dicke zerlegt, deren Geometriedaten aufgrund der vorgewählten Plattendicke festgelegt und dann zur Steuerung eines spanenden Bearbeitungswerkzeuges genutzt werden. Da bei der Zerlegung des herzustellenden Werkstückes in eine zu dessen Bildung entsprechende Anzahl von aufeinander zu stapelnden Platten die Konturen des herzustellenden Werkstückes mehr oder minder außer Betracht bleiben, ist es mit keinem der vorbeschriebenen Verfahren möglich, Werkstücke mit komplizierten Formen hinterschnittfrei herzustellen.

Ausgehend von diesem Stand der Technik liegt der Erfindung die Aufgabe zugrunde, die Prototypenfertigung drastisch zu verbilligen, und ein Verfahren zu schaffen, mit dem sowohl Prototypen als auch Einzelwerkstücke aus beliebigen Werkstoffen nicht nur als Anschauungsmodell, sondern auch in funktionsfähiger Ausführung auch dann hinterschnittfrei hergestellt werden können, wenn diese eine relativ komplizierte Form aufweisen.

Diese Aufgabe wird, ausgehend von einem gattungsgemäßen Verfahren, durch die im Kennzeichenteil des Patentanspruches 1 aufgeführten Verfahrensschritte gelöst.

Ferner wird diese Aufgabe durch eine Vorrichtung gemäß Patentanspruch 8 gelöst.

Vorteilhafte Weiterbildungen der Erfindung sind in den abhängigen Ansprüchen beschrieben.

Die angesprochenen verschiedenen 3 D-Segmente treten z.B. auf bei mehrfach geteilten Dauerformen mit Schiebern oder z.B. bei geteilten Schäumwerkzeugen. Mit dem erfindungsgemäßen Verfahren ist es möglich, die in den meisten Werkstätten ohnehin vorhandenen, beispielsweise CNC gesteuerten, Bearbeitungsmaschinen zum Einsatz zu bringen, deren Steuerkommandos von den im Computerspeicher vorhandenen Geometriedaten abgeleitet werden können. Durch die erfindungsgemäße Anordnung der Schnittflächen, die jede beliebige Form aufweisen und gegebenenfalls auch gekrümmt verlaufen können, wird das herzustellende Werkstück in eine Mehrzahl von Platten unterschiedlicher Dicke aufgeteilt, wobei die Schnittflächen der Platten so gelegt werden, daß in zwei Aufspannungen eine hinterschnittfreie Bearbeitung möglich ist, und hierdurch komplizierte Bearbeitungsoperationen vermieden werden können. Die einzelnen Platten des Werkstückes werden also nacheinander gefertigt und nach jeweils einer Teilfertigung mit einer vorher gefertigten, ihr am fertigen Werkstück benachbarten Platte verbunden. Danach wird in dem verbundenen Zustand sowohl die zweite Schnittfläche als auch die fertige Kontur dieser Platte erzeugt.
Für das Herstellen einer solchen Verbindung kann die jeweils sowohl an ihrer ersten Schnittfläche bearbeitete, als auch zumindest schon teilweise konturierte Platte mit ihrer Halteeinrichtung von der bearbeitenden Maschine gelöst und z.B. in eine Fügepresse verbracht werden, in welcher sich eine weitere Palette mit der ersten Platte oder den bereits gefügten Platten befindet, so daß die weitere Platte z.B. durch Aufpressen und/oder mit geeigneten Verbindungsmitteln angefügt und verbunden werden kann.
Diese Fügepresse kann als Zusatzbaugruppe in der ersten Bearbeitungsmaschine vorhanden und dort funktionsfähig aufgebaut werden, oder es kann sich um eine Sondereinrichtung handeln, die von den Bearbeitungsmachinen unabhängig ist. Es ist damit möglich, auf Sondermaschinen und komplizierte und teure Verfahren zu verzichten.
Darüber hinaus ist es auch möglich, auf diese Art verlorene Modelle aus Polystyrol, Wachs oder Holz zu erzeugen, wobei die solcherart erzeugten Modelle dann im nachfolgenden Gießverfahren geopfert werden können und ein Prototyp in Fein- oder Vollformguß erhalten wird.
Die Bearbeitung von verlorenen Modellen in z.B. Kunststoff erfordert kürzere Fräszeiten und es wird als Ergebnis ein Prototyp als homogenes Bauteil erhalten.
Bei der nach dem erfindungsgemäßen Verfahren erfolgenden Herstellung eines Prototyps im Zielwerkstoff, beispielsweise Metall, wird ein Bauteil hoher Festigkeit erhalten, das den Anforderungen an die Formstabilität in gleichem Maße wie ein in herkömmlicher Weise mit Hinterschnitten bearbeitetes Bauteil entspricht. Nachfolgeverfahren, wie z.B. das Ausgießen eines verlorenen Modells sind in diesem Fall dann nicht mehr notwendig.

Insbesondere werden die folgenden Vorteile mit dem erfindungsgemäßen Verfahren erreicht :
- durch die Nutzung von vorhandenen Fertigungseinrichtungen ist das Erzeugen eines Prototyps bei niedrigen Kosten möglich;
- Investitionen für evtl. erforderliche Zusatzeinrichtungen sind gering, der Prototyp kann ohne Zwischen- oder Nachfolgeschritte unmittelbar im Zielwerkstoff hergestellt werden;
- durch die Verwendung von geeigneten Werkstoffen können Prototypen erzeugt werden, die thermisch und mechanisch belastbar sind;
- durch eine spanende Bearbeitung wie z.B. das CNC-Fräsen wird eine hohe Oberflächenqualität erzielt;,
- komplexe Teile können innerhalb von kurzen Bearbeitungszeiten mit engen Toleranzen gefertigt werden;
- die erzeugten Prototypen eignen sich besonders für anspruchsvolle Anwendungen wie beispielsweise als komplexe Gußteile, Strömungsmodelle mit polierten Oberflächen in schwer zugänglicher Geometrie, Plexiglasmodelle für die Spannungsoptik, Schmiedewerkzeuge für die Bemusterung und als Kokillen, Druck- oder Spritzgußformen .

Günstig ist es wenn das Werkstück CAD-gemäß in mindestens drei Platten unterteilt wird. In diesem Falle erhält man ein Werkstück, bei dem eine mittlere, von zwei Schnittflächen begrenzte Platte zu jeder Seite der beiden Schnittflächen von einer Endplatte begrenzt wird, die jeweils nur eine einzige Schnittfläche aufweist. Sinnvollerweise werden die Schnittflächen so gelegt, daß die von zwei Schnittflächen begrenzte Platte eine konstante Dicke hat; d.h. ihre beiden Schnittflächen verlaufen parallel zueinander.
Abweichend davon ist das Verfahren aber auch dazu geeignet, bei Platten angewendet zu werden, deren Schnittflächen einen Winkel miteinander einschließen, oder gekrümmt verlaufen. In diesem Zusammenhang ist es von Vorteil, wenn die für die Aufspannung der Platten verwendeten Aufspannpaletten auch in eine winkelige Lage zueinander überführt werden können. Platten mit zueinander unter einem Winkel stehenden Schnittflächen können beispielsweise bei Werkstücken in Betracht kommen, die starke Krümmungen aufweisen, oder in welchen Vorsprünge oder Hinterschneidungen auftreten, die im Verhältnis zu den übrigen Teilen des Werkstückes nur eine geringe Ausdehnung haben; Getriebegehäuse und Formwerkzeuge liefern hinreichende Beispiele dafür.

Grundsätzlich wird die Mindestdicke einer Platte so festzulegen sein, daß selbst bei der Herstellung dünnandiger Konturenbereiche die beim Bearbeiten entstehenden Schnittkräfte und auch eventuell auftretende thermische Belastungen ohne -oder mit nur minimaler elastischer oder plastischer- Verformung aufgenommen werden können. Eine Reduzierung dieser Belastungen kann bei spanenden Fertigungsverfahren durch Einsatz von Hochgeschwindigkeits-werkzeugen erreicht werden.

Üblicherweise wird man zur Durchführung des Verfahrens mit zwei Aufspannpaletten auskommen. Es spricht nichts dagegen, diese Zahl beliebig zu vergrößern, wenn es beispielsweise um die Erzeugung von Werkstücken geht, die weit auskragende Teile haben. Bei der Bearbeitung von solche Teile bildenden Platten kann die Verwendung einer dritten oder vierten Aufspannpalette und das Zuarbeiten auf weiteren Bearbeitungsmaschinen im Hinblick auf eine mögliche Verkürzung der Fertigungszeiten zweckmäßig sein .

Ein Ausführungsbeispiel der Erfindung ist in der Zeichnung dargestellt und wird im folgenden näher beschrieben.

Als Ausführungsbeispiel ist dabei ein ausschließlich spanend -beispielsweise durch Fräsen- zu bearbeitendes Werkstück gewählt. Selbstverständlich können sämtliche spanenden oder in einer sonstigen abtragenden Weise arbeitenden Fertigungsverfahren wie beispielsweise Erodier- oder Laserverfahren u.ä angewandt werden.

Es zeigen jeweils in nicht maßstäblicher und zumindest teilweise stark vereinfachter Darstellung:
**Fig. 1:** die CAD-Geometrie eines herzustellenden Werkstückes;
**Fig. 2:** das Aufteilen der CAD-Geometrie in mehrere Platten;
**Fig. 3:** die Folge der Bearbeitungsschritte und des Aufspannens aufgrund der Platteneinteilung gemäß Fig. 2, wobei die linke Darstellung die jeweilige Erstbearbeitung und die rechte Darstellung die jeweilige Zweitbearbeitung der Platten verdeutlicht;
**Fig. 4:** eine bildliche Wiedergabe eines Ausschnittes aus der Folge der Bearbeitungsschritte und des Aufspannens;
**Fig. 5:** eine schematische Darstellung des Verfahrensablaufs.

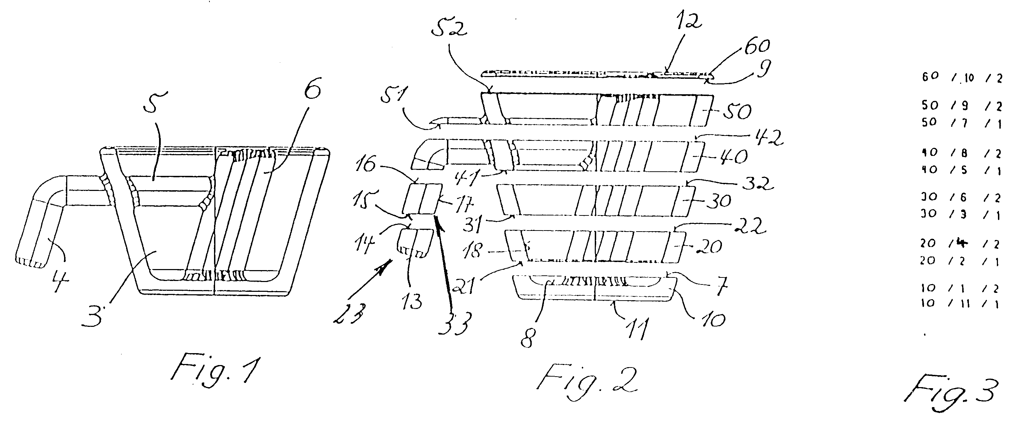

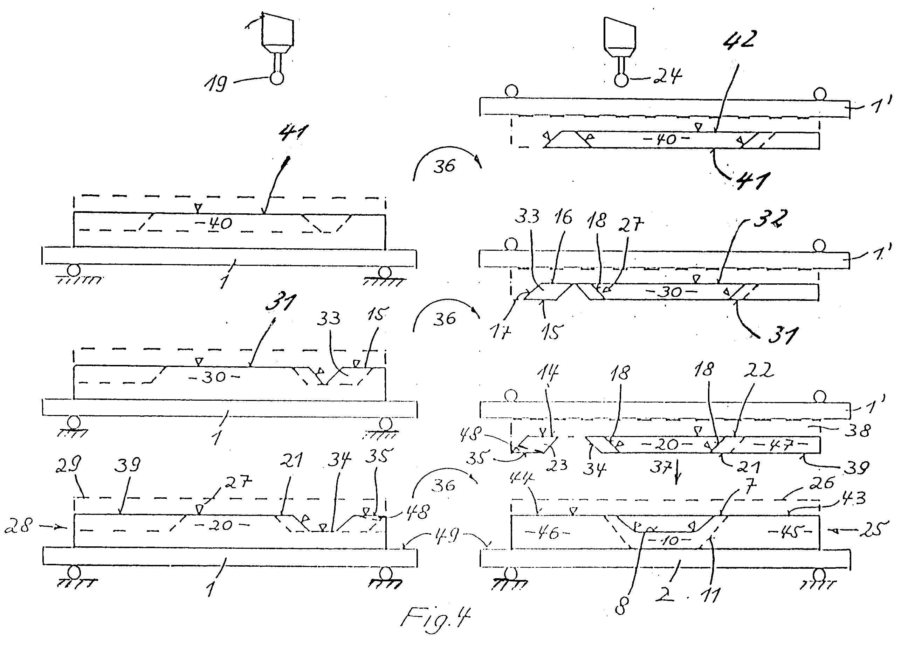

In Fig. 1 ist ein Werkstück 3 gezeigt, das die Form einer Tasse mit einem weit auskragenden Griff 4 und inneren Vorsprüngen 5 sowie Ausnehmungen 6 aufweist. Die CAD-Geometrie des Werkstückes 3 ist in mehrere aufeinanderfolgende Platten 10,20,30,40,50, und 60 aufgeteilt, die eine jeweils unterschiedliche Dicke aufweisen können. Die Umrisse der ersten Platte 10 werden von einer Schnittfläche 7, einer äußeren Oberfläche 11 und einer inneren Oberfläche 8 begrenzt . Ähnliches gilt für die letzte Platte 60, die von einer Schnittfläche 9 und einer äußeren Oberfläche 12 begrenzt wird. Die zwischen der ersten Platte 10 und der letzten Platte 60 gelegenen Platten 20, 30, 40 und 50 werden jeweils von zwei Schnittflächen, nämlich einer jeweils ersten Schnittfläche 21 und einer jeweils zweiten Schnittfläche 22, bzw. den Schnittflächen 31,32 bzw. 41,42 bzw. 51,52 unten und oben begrenzt. Ähnliches gilt für den Griff 4, der in der Verlängerung der Platten 20 und 30 in völlig zusammenhanglose Einzelteile 23 bzw. 33 aufgeteilt ist. Das Einzelteil 23 wird von einer äußeren Oberfläche 13 und einer Schnittfläche 14 begrenzt, die in der Ebene der Schnittfläche 22 liegt. Das darüber liegende Einzelteil 33 entspricht der Platte 30; es wird von den beiden Schnittflächen 15 und 16, die in der Ebene der Schnittflächen 31 bzw. 32 liegen und einer äußeren Oberfläche 17 begrenzt.
Analoges gilt für die Platten 40 und 50, wie es aus der Figur 2 ohne weiteres ersichtlich ist.

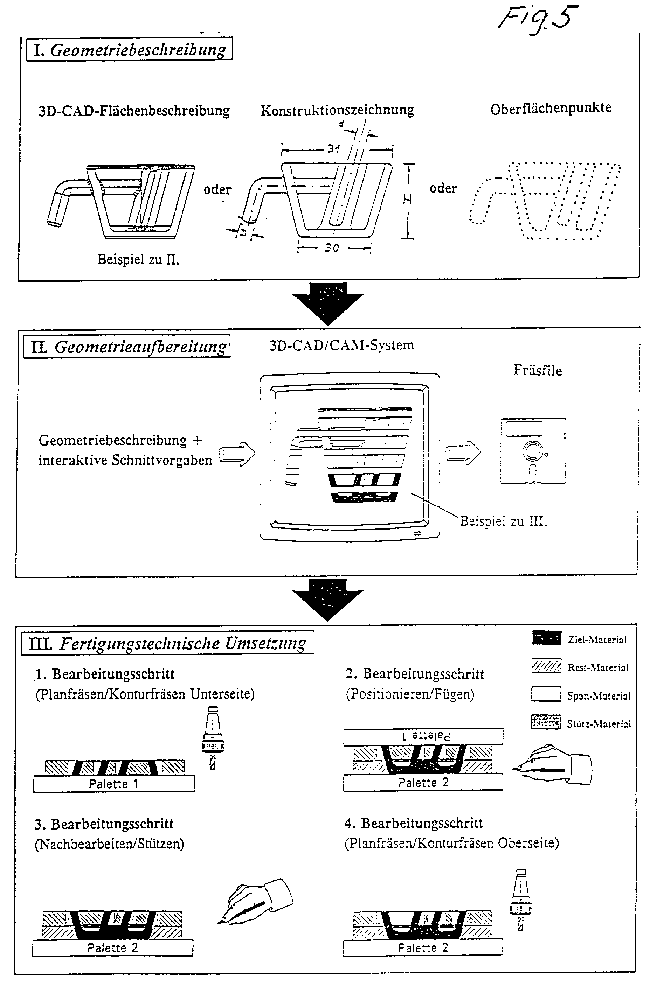

Die Figur 3 stellt das Bearbeitungsschema in drei Spalten dar, deren einzelne Zeilen den jeweiligen Platten 10,20,30,40,50, und 60 zugeordnet sind. In der linken Spalte sind die Ziffern der Platten von unten mit 10 angefangen angegeben. In der mittleren Spalte ist eine Folge von Bearbeitungsschritten mit den Ziffern [1] bis [11] angegeben, wobei diese Ziffern nicht identisch sind mit den vorliegenden Bezugsziffern. In der rechten Spalte wechseln die Bezugsziffern 1 und 2 miteinander ab, die jeweils die Aufspannpaletten 1 und 2 bezeichnen.
In der Zusammenschau der Figuren 2 und 3 bedeutet beispielsweise die Ziffer [3] in der mittleren Spalte der Figur 3 in Verbindung mit der rechten Spalte dieser Figur, das Bearbeiten der ersten Schnittfläche 31 der Platte 30 der Figur 2.
Die Ziffer [6] in der mittleren Spalte der Figur 3 bedeutet im Zusammenhang mit der Ziffer 2 dieser Figur dementsprechend das Bearbeiten der zweiten Schnittfläche 32 der Platte 30.

Die numerische Reihenfolge der Ziffern [1] bis [11] der mittleren Spalte der Figur 3 läßt also die Folge der Arbeitsschritte erkennen, mit denen die Platten 10,20,30,40,50 und 60 nacheinander bearbeitet werden. Diese Folge ist nicht zwangsläufig, vielmehr kann im weiteren Sinne der Erfindung die Bearbeitung des Werkstückes 3 bei jeder beliebigen Platte 10,20,30,40,50, oder 60 begonnen werden. Der Vollständigkeit halber bezeichnet die Bezugsziffer 18 eine innere Oberfläche des Werkstückes 3, die sich aus den Teilflächen der Innenseite aller Platten 20,30,40,50 und 60 zusammensetzt und in die innere Oberfläche 8 der unteren Platte übergeht.
Die linke Hälfte der Figur 4 zeigt die Aufspannpalette 1 und das zugeordnete Fräswerkzeug 19. Die rechte Hälfte zeigt die Aufspannpalette 2 mit dem zugeordneten Fräswerkzeug 24. Die Fräswerkzeuge 19 und 24 können auch identisch sein, d.h mit jedem der beiden Fräswerkzeuge 19 und 24 können Bearbeitungen sowohl auf der Aufspannpalette 1 als auch auf der Aufspannpalette 2 vorgenommen werden; mitunter reicht auch die Verwendung eines einzelnen Fräswerkzeuges 19 oder 24 für beide Aufspannpaletten 1 und 2 aus.
Auf der Aufspannpalette 2 ist ein Rohling 25 aufgespannt, mit dem die Bearbeitung beginnt. Von diesem Rohling 25 wird mit dem Fräswerkzeug 24 in einem ersten Arbeitsschritt [1] das Volumen 26 zerspant, das durch die unterbrochene Linie angedeutet ist. Dabei entstehen die Schnittfläche 7 und ein Teil der Werkstückkontur, nämlich ein Abschnitt der inneren Oberfläche 8 der ersten Platte 10. Die auf der Spitze stehenden Dreiecke 27 deuten die jeweils bearbeiteten Oberflächen an. Auf der Aufspannpalette 1 wird unterdessen, d.h. gleichzeitig oder anschließend, der Rohling 28 bearbeitet. Mit dem Fräswerkzeug 19 wird das Volumen 29 zerspant und es entstehen die erste Schnittfläche 21 und ein weiterer Teil der Werkstückkontur, nämlich die Abschnitte der äußeren Oberfläche 34 der Platte 20 sowie eine Schnittfläche 35, die dem Einzelteil 23 zugeordnet ist. Soweit bei der Bearbeitung einer Platte Teile des herzustellenden Körpers entstehen, die innerhalb der Plattendicke keine Verbindung untereinander haben, kann zwischen diesen Teilen zunächst ein Stützsteg stehenbleiben. Der vom Fräser hergestellte Freiraum entlang der Umfangskontur kann mit einem sich rasch verfestigenden und leicht zu entfernenden Stützmaterial aufgefüllt werden, um die Verbindung solcher einzelnen Elemente untereinander leichter herzustellen und/oder zu verbessern.
Durch Verschieben und Schwenken in Richtung des gekrümmten Pfeiles 36 wird die Aufspannpalette 1 zusammen mit dem darauf aufgespannten und inzwischen einseitig bearbeiteten Rohling 28 in die Lage 1' überführt. In dieser Lage werden die beiden Aufspannpaletten 1 und 2 miteinander verriegelt; übliche, einander entsprechende Indexiereinrichtungen (nicht gezeigt) an den Aufspannpaletten 1 und 2 leisten dafür Gewähr, daß beim vorausgegangenen Absenken in Richtung des Pfeiles 37 der beiden Aufspannpaletten 1,2 während des Indexierens die beiden Schnittflächen 7,21 der Platten 10 bzw. 20 im Sinne der CAD-Geometrie miteinander zur Deckung gebracht werden. Referenzpunkte (nicht gezeigt) auf den Aufspannflächen 49 der beiden Aufspannpaletten 1 und 2 erlauben eine aufeinander abgestimmte Lageorientierung der Rohlinge 25 und 28 beim Aufspannen und während des Fräsens, welche das Zur-Deckung-Bringen der Schnittflächen 7 und 21 ermöglicht.

Die miteinander zur Deckung gebrachten, inzwischen einseitig bearbeiteten Platten 10 und 20 werden sodann an ihren gemeinsamen Schnittflächen 7 und 21 fest und dauerhaft miteinander verbunden. Anschließend werden die beiden Aufspannpaletten 1,2 voneinander gelöst, wobei natürlich auch gleichzeitig die einseitig bearbeitete Platte 20 von der verschwenkten Aufspannpalette 1' gelöst wird. Diese wird wieder in ihre Ausgangslage zurückgeführt.
Mit Hilfe des Fräswerkzeuges 24 wird sodann das Volumen 38 zerspant. Dabei entstehen die zweite Schnittfläche 22 der Platte 20, die Schnittfläche 14 des Griffes 4, sowie ein weiterer Teil der Werkstückkontur, nämlich Abschnitte der inneren Oberfläche 18.
Für den Fall, daß die miteinander verbundenen Schnittflächen 7 und 21 nicht groß genug sind, um die bei der Zerspanung des Volumens 38 entstehenden Kräfte auf die Aufspannpalette 2 zu übertragen, kann es günstig oder sogar erforderlich sein, bei der Zerspanung des Volumens 29 zusätzliche Flächenabschnitte 39 stehen zu lassen, die sodann mit den stehengebliebenen Flächenabschnitten 43 der einseitig bearbeiteten Platte 10 verbunden werden. Ähnlich verhält es sich mit den stehengebliebenen Flächenabschnitten 44, die zur Fixierung der Schnittfläche 35 erforderlich sind. Nachdem sodann das gesamte Werkstück 3 durch analoge Bearbeitung der restlichen Platten 30, 40, 50 und 60 aufgebaut wurde, wird es gewendet und mit der äußeren Oberfläche 12 auf eine der Aufspannpaletten 1 oder 2 aufgespannt. Durch abschließendes Zerspanen der stehengelassenen Volumina 45,46,47 und 48 wird ein weiterer Teil der Werkstückkontur, nämlich die gesamte äußere Oberfläche 11,13,17 und 34 erzeugt. Mit der Ausführung von evtl. erforderlichen Nacharbeiten auf den inneren Oberflächen 8 und 18 erhält das Werkstück 3 schließlich seine endgültige durch die CAD-Geometrie bestimmte Formgestalt.
Das feste Verbinden der einzelnen Platten 10,20,30,40,50 und 60 erfolgt form-, stoff- oder kraftschlüssig oder mit Kombinationen hiervon. Zum Aufbringen eines Anpreßdruckes beispielsweise zum Herstellen einer Klebeverbindung ist der Aufspannpalette 2 üblicherweise eine Fügevorrichtung zugeordnet.
In Figur 5 ist bildlich ein schematisierter Ablauf einer Prototypenherstellung dargestellt. Der Ablauf ist aufgeteilt in drei Bereiche, die mit I, II und III überschrieben sind, wobei der mit III gekennzeichnete Bereich noch einmal unterteilt ist in vier Bearbeitungsschritte.

Im Bereich I ist die Geometriebeschreibung des herzustellenden Werkstückes symbolisiert. Die Geometriebeschreibung kann auf unterschiedliche Art und Weise erfolgen, wobei drei dieser Möglichkeiten, nämlich die 3D-CAD-Flächenbeschreibung, die Konstruktionszeichnung und die Computerdarstellung über Oberflächenpunkte angedeutet wurden. Im Bereich II, der Geometrieaufbereitung, wird die Geometrie des Werkstückes vom Computer erfaßt und abgespeichert und es wird sodann die erfaßte und abgespeicherte Geometrie durch die Bestimmung entsprechender Schnittlinien aufgeteilt, so daß Platten definiert sind, wie dies das mittlere Bild unter II symbolisiert. Die erfaßte Geometrie und die definierte Aufteilung kann nun auf einen beispielsweise externen Speicher wie einer Diskette abgespeichert und zur Steuerung z.B. einer CNC-gesteuerten Fräsmaschine transportiert und dort übernommen werden. Die Daten können so aufbereitet sein, daß sie direkt von der Steuerung der Maschine verarbeitet werden können. Sie können aber auch erst nach Übernahme in einen entsprechenden Speicher der Maschinensteuerung dort aufbereitet werden. Die Steuerdaten können z.B. in eine CNC-Fräsmaschine eingegeben werden, wovon unter III in dem ersten Bearbeitungsschritt auf der linken Seite ein Maschinenwerkzeug und eine zugehörige Aufspannpalette symbolisch dargestellt ist. Bei dieser dort dargestellten Arbeitsfolge wird auf der Aufspannpalette 1 die zweite Platte unter II auf einer ersten Seite bearbeitet. Die Palette 1 wird mitsamt der zweiten Platte des Werkstückes zur Fügepresse gebracht und der schon bearbeiteten Palette 2 gegenüberliegend angeordnet, wie dies im Bild unter der Überschrift "2. Bearbeitungsschritt" dargestellt ist. In dieser Anordnung werden die beiden Paletten und damit auch die zugehörigen Platten gegeneinandergefahren, bis ihre entsprechenden, sich gegenüberliegenden Flächen zur gegenseitigen Anlage kommen und es werden sodann die zweite Platte und die erste Platte miteinander befestigt. Die Palette 1 wird nun von der zweiten Platte gelöst und es wird die Palette 2 mit beiden Platten in einem auch in der Zeichnung so bezeichneten "3.Bearbeitungsschritt" auf einen Arbeitstisch gelegt, um eine evtl. manuelle Nachbearbeitung durchzuführen u./o. ein Stützmaterial einzubringen. Ist dies erledigt oder nicht erforderlich, wird die Palette 2 mit beiden Platten wieder auf der CNC-gesteuerten Fräsmaschine aufgenommen und es wird sodann die zweite Platte auf ihrer zweiten Seite in einem "4. Bearbeitungsschritt" bearbeitet. Anschließend wird wieder auf Palette 1 der nächste Rohling zur Bearbeitung der dritten Platte befestigt, worauf wieder Palette 2 mit dem gesamten bisher gefügten Teil und die Palette 1 mit der nächsten Platte zur Fügeeinrichtung zur Durchführung des Fügeprozesses verbracht werden, sodaß sich nun der beschriebene Ablauf so oft wiederholt, bis das Werkstück geschaffen ist.

## Patentansprüche

1. Verfahren zur Erzeugung eines als Prototyp dienenden Werkstückes (3) das von einer Mehrzahl von Platten (10,20,30,40,50,60) gebildet ist, die an ihrer Oberfläche bearbeitet und zur Bildung des herzustellenden Werkstückes (3) miteinander verbunden werden, wobei die Geometriedaten des Werkstückes in einen Computer gegeben werden, der hieraus die Daten für die Arbeitsbewegungen eines Werkzeuges (19,24) für die Bearbeitung der Platten (10,20,30,40,50,60) ermittelt,
dadurch gekennzeichnet, daß
**a)** in dem Computer, ausgehend von den definierten Geometriedaten des Werkstückes, eine Zerlegung desselben in 3D-Segmente erfolgt, die in Platten (10,20,30,40,50,60) bestimmter Dicke zerlegt werden;
**b)** die Platten (10,20,30,40,50,60) aus Rohlingen (25,28) entsprechender Dicke hergestellt werden, an denen Schnittflächen (21,22;31,32;41,42;51,52) gebildet werden;
**c)** die Schnittflächen (21,22;31,32;41,42;51,52) einer jeden Platte (10,20,30,40,50,60) so gewählt werden, daß jede der Platten (10,20,30,40,50,60) zur Konturenbildung des Werkstückes (3) in zwei Aufspannungen hinterschnittfrei fertig bearbeitbar ist;
**d)** von einer beliebigen Platte ausgehend, die einzelnen Rohlinge (25,28) zur Erzeugung sowohl ihrer jeweils ersten Schnittfläche (21,31,41,51) als auch von Werkstückkonturen nacheinander mit Hilfe des Werkzeuges (19,24) bearbeitet werden;
**e)** am fertigen Werkstück (3) einander benachbarte Platten (10,20;20,30;30,40;40,50) zu dessen Bildung an ihren Schnittflächen (22,31;32,41;42,51) miteinander verbunden werden, wobei;
**f)** eine an ihrer ersten Schnittfläche (31) mit einer zweiten Schnittfläche (22) einer ersten Platte (20) verbundene zweite Platte (30) zur Erzeugung ihrer zweiten Schnittfläche (32) sowie weiterer Werkstückkonturen durch das Werkzeug (19,24) bearbeitet wird und alle überflüssigen Überstände entfernt werden;
**g)** die nächst folgende dritte Platte (40) zur Bildung sowohl ihrer ersten Schnittfläche (41) als auch von weiteren Werkstückkonturen bearbeitet wird, sodann gegen die zweite Schnittfläche (32) der zweiten Platte (30) gelegt und mit dieser verbunden wird;
**h)** die an ihrer ersten Schnittfläche (41) mit der zweiten Platte (30) verbundene dritte Platte (40) zur Bildung sowohl ihrer zweiten Schnittfläche (42) als auch von weiteren Werkstückkonturen bearbeitet wird;
**i)** alle weiteren zur Bildung des Werkstückes erforderlichen Platten zur Bildung sowohl ihrer jeweils ersten Schnittfläche als auch von Werkstückkonturen bearbeitet, sodann mit der zweiten Schnittfläche der jeweils vorangehenden Platte verbunden und anschließend zur Bildung sowohl ihrer jeweils zweiten Schnittfläche als auch von Werkstückkonturen bearbeitet werden;
**j)** in einem weiteren Bearbeitungsvorgang evtl. belassenes Stützmaterial entfernt wird.

2. Verfahren nach Anspruch 1, dadurch gekennzeichnet, daß jeweils zwei am fertigen Werkstück (3) einander benachbarte Platten (10,20;20,30;30,40;40,50) zur Bildung sowohl ihrer jeweils ersten Schnittfläche (21,31,41,51) als auch von Werkstückkonturen auf je einer, einer Bearbeitungsmaschine zugeordneten, Aufspannpalette (1,2) befestigt werden und beide Aufspannpaletten (1,2) nach der Bearbeitung zum Zusammenfügen der beiden Platten (10,20;20,30;30,40;40,50) auf eine Einrichtung zum Fügen und Pressen verbracht und dort so relativ zueinander bewegt werden, daß die jeweils zweite Schnittfläche (22,32,42,52) einer vorangehenden Platte und die jeweils erste Schnittfläche (21,31,41,51) einer dieser nachfolgenden Platte in vorbestimmter Relativlage einander gegenüber liegen.

3. Verfahren nach Anspruch 2, dadurch gekennzeichnet, daß die Aufspannflächen (49) der Aufspannpaletten (1,2) in eine zueinander spiegelbildliche Lage, in der die jeweils erste Schnittfäche der einen und die jeweils zweite Schnittfläche der anderen Platte übereinander liegen, überführt werden, wozu jeweils nur die nur eine bearbeitete Platte tragende Aufspannpalette (1 bzw. 2) relativ zur anderen Aufspannpalette (2 bzw.1) bewegt wird.

4. Verfahren nach einem oder mehreren der vorangehenden Ansprüche, dadurch gekennzeichnet, daß die Aufspannflächen (49) der Aufspannpaletten (1,2) in eine zueinander parallele Lage mit identischem Referenzsystem überführt werden .

5. Verfahren nach einem oder mehreren der vorangehenden Ansprüche, dadurch gekennzeichnet, daß jeweils zwei am fertigen Werkstück einander benachbarte Platten auf den Aufspannpaletten (1,2) in einer zueinander spiegelbildlichen Lage aufgespannt werden.

6. Verfahren nach einem oder mehreren der vorangehenden Ansprüche, dadurch gekennzeichnet, jeweils zwei am fertigen Werkstück einander benachbarte Platten form-, stoff- oder kraftschlüssig oder mit Kombinationen hiervon miteinander verbunden werden, wobei die Vorbereitung formschlüssiger Verbindungen vorzugsweise während der Bearbeitung erfolgt.

7. Verfahren nach einem oder mehreren der vorangehenden Ansprüche, dadurch gekennzeichnet, daß evtl. schon vorhandene Stützstege durch ein sich verfestigendes und am Ende des Bearbeitungsvorganges leicht entfernbares Stützmaterial ergänzt werden, welches in einen sich ergebenden Hohlraum eingebracht wird .

8. Vorrichtung zur Durchführung des Verfahrens nach Anspruch 1, dadurch gekennzeichnet, daß sie mindestens eine 3-achsige Bearbeitungsmaschine mit wenigstens zwei Spannmitteln (Aufspannpaletten 1,2 ) und mindestens einem Bearbeitungswerkzeug ( 19,24 ) mit geometrisch bestimmter oder unbestimmter Schneide sowie Mittel zum Verbinden oder Fügen der Platten aufweist.

9. Vorrichtung nach Anspruch 8, dadurch gekennzeichnet, daß daß sie eine Fügepresse mit Aufnahme- und Führungselementen für die beiden Aufspannpaletten (1,2) aufweist, um diese in eine in Bezug auf ihre jeweiligen Aufspannflächen (49) spiegelbildliche Lage (1') zu führen und in dieser zu halten.

10. Vorrichtung nach einem der Ansprüche 8 oder 9, dadurch gekennzeichnet, daß die Aufspannflächen (49) der Aufspannpaletten (1,2) mit mindestens je einer Referenzmarkierung versehen sind.

## Claims

1. Method of producing a workpiece (3), which serves as a prototype and is formed from a plurality of plates (10, 20, 30, 40, 50, 60) which are processed on their upper surface and are interconnected to form the workpiece (3) to be produced, the geometrical data of the workpiece being fed into a computer which determines therefrom the data for the operational movements of a tool (19, 24) for the processing of the plates (10, 20, 30, 40, 50, 60),
characterised in that
a) on the basis of the defined geometrical data of the workpiece, said workpiece is split into 3-D segments in the computer, said segments being split into plates (10, 20, 30, 40, 50, 60) of a predetermined thickness;
b) the plates (10, 20, 30, 40, 50, 60) are produced from blanks (25, 28) of an appropriate thickness, on which cut faces (21, 22; 31, 32; 41, 42; 51, 52) are formed;
c) the cut faces (21, 22; 31, 32; 41, 42; 51, 52) of each plate (10, 20, 30, 40, 50, 60) are so selected that each of the plates (10, 20, 30, 40, 50, 60) can be finished in an undercut-free manner to form the configurations of the workpiece (3) in two clamping devices;
d) on the basis of a desired plate, the individual blanks (25, 28) are processed one after the other by means of the tool (19, 24) to produce both of their respective first cut face (21, 31, 41, 51) and workpiece configurations;
e) plates (10, 20; 20, 30; 30, 40; 40, 50), which are adjacent one another on the finished workpiece (3), are interconnected at their cut faces (22, 31; 32, 41; 42, 51) to form said workpiece, whereby
f) a second plate (30), connected at its first cut face (31) to a second cut face (22) of a first plate (20), is processed by the tool (19, 24) to produce its second cut face (32) as well as additional workpiece configurations, and all of the surplus protruding portions are removed;
g) the immediately following third plate (40) is processed to form both its first cut face (41) and additional workpiece configurations, then placed against the second cut face (32) of the second plate (30) and connected thereto;
h) the third plate (40), which is connected at its first cut face (41) to the second plate (30), is processed to form both its second cut face (42) and additional workpiece configurations;
i) all of the additional plates needed to form the workpiece are processed to form both their respective first cut face and workpiece configurations, then connected to the second cut face of the respective preceding plate and subsequently processed to form both their respective second cut face and workpiece configurations;
j) any remaining support material is removed in an additional processing operation.

2. Method according to claim 1, characterised in that two respective plates (10, 20; 20, 30; 30, 40; 40, 50), which are adjacent one another on the finished workpiece (3), are mounted on a respective clamping pallet (1, 2), associated with a processing machine, in order to form both their respective first cut face (21, 31, 41, 51) and workpiece configurations, and, after the processing operation, both clamping pallets (1, 2) are brought to a joining and pressing arrangement in order to join the two plates (10, 20; 20, 30; 30, 40; 40, 50) together, and there they are so displaced relative to each other that the respective second cut face (22, 32, 42, 52) of a preceding plate and the respective first cut face (21, 31, 41, 51) of a plate following this lie opposite each other in a predetermined relative position.

3. Method according to claim 2, characterised in that the clamping faces (49) of the clamping pallets (1, 2) are transferred into a mirror-inverted position relative to one another, in which position the respective first cut face of one plate and the respective second cut face of the other plate lie one above the other, and in each case only the clamping pallet (1 or 2 respectively) carrying only one processed plate is displaced relative to the other clamping pallet (2 or 1 respectively).

4. Method according to one or more of the preceding claims, characterised in that the clamping faces (49) of the clamping pallets (1, 2) are transferred into a position parallel to one another with an identical reference system.

5. Method according to one or more of the preceding claims, characterised in that two respective plates, which are adjacent each other on the finished workpiece, are clamped on the clamping pallets (1, 2) in a mirror-inverted position relative to each other.

6. Method according to one or more of the preceding claims, characterised in that two respective plates, which are adjacent each other on the finished workpiece, are interconnected in a form-locking, material-locking or force-locking manner or by combinations thereof, the preparation of form-locking connections being preferably effected during the processing operation.

7. Method according to one or more of the preceding claims, characterised in that any supporting webs which may already exist are supplemented by a self-hardening support material which is easily removable at the end of the processing operation and is introduced into a resultant cavity.

8. Apparatus for accomplishing the method according to claim 1, characterised in that it includes at least one 3-axis processing machine having at least two clamping means (clamping pallets 1, 2), at least one processing tool (19, 24) with a geometrically defined or undefined cutting edge, and means for connecting or joining the plates.

9. Apparatus according to claim 8, characterised in that it includes a jointing press having means for receiving and guiding the two clamping pallets (1, 2), in order to guide said pallets into a mirror-inverted position (1') relative to their respective clamping pallets (49) and to retain them in such position.

10. Apparatus according to one of claims 8 or 9, characterised in that the clamping faces (49) of the clamping pallets (1, 2) are provided with at least one respective reference marker.

## Revendications

1. Procédé pour fabriquer une pièce (3) servant de prototype et constituée d'une pluralité de plaques (10, 20, 30, 40, 50, 60), qui sont usinées sur leur surface et sont reliées entre elles pour former la pièce (3) à fabriquer, les coordonnées géométriques de la pièce étant introduites dans un ordinateur qui calcule sur cette base des données pour les mouvements de travail d'un outil (19, 24) pour l'usinage des plaques (10, 20, 30, 40, 50, 60), caractérisé en ce que
a) à partir des coordonnées géométriques définies de la pièce, on procède, dans l'ordinateur, à un fractionnement de la pièce en segments tridimensionnels qui sont fractionnés en plaques (10, 20, 30, 40, 50, 60) d'épaisseur déterminée,
b) les plaques (10 ,20 ,30 , 40, 50, 60) sont fabriquées à partir d'ébauches (25, 28) d'épaisseur appropriée sur lesquelles on forme des surfaces de coupe (21, 22 ; 31, 32 ; 41, 42 ; 51, 52) ;
c) les surfaces de coupe (21, 22; 31, 32; 41, 42; 51, 52) de chaque plaque (10, 20, 30, 40, 50, 60) sont choisies de manière à ce que chacune des plaques (10, 20, 30, 40, 50, 60) puisse être parachevée en deux fixations sans contre-dépouille pour la formation des contours de la pièce (3) ;
d) en partant d'une plaque quelconque, les ébauches individuelles (25, 28) sont usinées successivement à l'aide de l'outil (19, 24) pour la réalisation de leur première surface de coupe respective (21, 31 ,41 ,51) ainsi que des contours de la pièce ;
e) sur la pièce (3) finie, les plaques voisines (10, 20 ; 20, 30 ; 30, 40 ; 40, 50) sont reliées entre elles au niveau de leurs surfaces de coupe (22, 31 ; 32, 41 ; 42, 51) pour la formation de la pièce ;
f) une deuxième plaque (30) reliée au niveau de sa première surface de coupe (31) à une deuxième surface de coupe (22) d'une première plaque (20) est usinée par l'outil (19, 24) pour réaliser sa deuxième surface de coupe (32) et d'autres contours de la pièce et toutes les parties débordantes superflues sont enlevées ;
g) la troisième plaque (40) suivante est usinée pour réaliser sa première surface de coupe (41) et d'autres contours de pièce, puis posée contre la deuxième surface de coupe (32) de la deuxième plaque (30) et reliée à celle-ci ;
h) la troisième plaque (40) reliée au niveau de sa première surface de coupe (41) à la deuxième plaque (30) est usinée pour réaliser sa deuxième surface de coupe (42) et d'autres contours de pièce ;
i) toutes les autres plaques nécessaires pour former la pièce sont usinées pour réaliser la première surface de coupe et les contours de la pièce, reliées ensuite à la deuxième surface de coupe de la plaque précédente respective et ensuite usinées pour réaliser la deuxième surface de coupe respective et d'autres contours de la pièce ;
j) le matériau support éventuellement laissé est enlevé au cours d'une autre opération d'usinage.

2. Procédé selon la revendication 1, caractérisé en ce que respectivement deux plaques (10, 20 ; 20, 30 ; 30, 40 ; 40, 50) voisines sur la pièce (3) finie sont fixées chacune sur une palette de fixation (1, 2) associée à une machine d'usinage pour réaliser aussi bien la première surface de coupe (21, 31, 41, 51) respective que les contours de la pièce et les deux palettes de fixation (1, 2) sont transférées après l'usinage sur un appareil d'assemblage et de pressage pour l'assemblage des deux plaques (10, 20 ; 20, 30 ; 30, 40 ; 40, 50) et sont déplacées à cet endroit l'une par rapport à l'autre de sorte que la deuxième surface de coupe (22, 32, 42, 52) respective d'une plaque précédente et la première surface de coupe (21, 31, 41, 51) respective d'une plaque suivant celle-ci se font face dans une position relative prédéfinie.

3. Procédé selon la revendication 2, caractérisé en ce que les surfaces de fixation (49) des palettes de fixation (1, 2) sont transférées dans une position symétrique l'une de l'autre par rapport à un plan où la première surface de coupe respective de l'une des plaques et la deuxième surface de coupe respective de l'autre plaque sont superposées, seule la palette de fixation (1 ou 2) portant seulement une plaque usinée étant déplacée par rapport à l'autre palette de fixation (2 ou 1).

4. Procédé selon l'une ou plusieurs des revendications précédentes, caractérisé en ce que les surfaces de fixation (49) des palettes de fixation (1, 2) sont transférées dans une position parallèle entre elles avec un système de référence identique.

5. Procédé selon l'une quelconque ou plusieurs des revendications précédentes, caractérisé en ce que chaque fois deux plaques voisines sur la pièce finie sont montées sur les palettes de fixation (1, 2) dans une position symétrique l'une de l'autre par rapport à un plan.

6. Procédé selon l'une ou plusieurs des revendications précédentes, caractérisé en ce que chaque fois deux plaques voisines sur la pièce finie sont reliées entre elles par conjugaison de forme, similitude de matière ou adhérence ou avec des combinaisons de ces formes de jonction, la préparation des assemblages par conjugaison de forme s'effectuant de préférence au cours de l'usinage.

7. Procédé selon l'une ou plusieurs des revendications précédentes, caractérisé en ce que d'éventuelles nervures déjà existantes sont complétées par un matériau de support qui se fixe et peut être enlevé facilement à la fin de l'opération d'usinage, lequel matériau est introduit dans une cavité qu'on obtient.

8. Dispositif pour la réalisation du procédé selon la revendication 1, caractérisé en ce qu'il présente au moins une machine d'usinage à trois axes avec au moins deux moyens de serrage (palettes de fixation 1, 2) et au moins un outil d'usinage (19, 24) avec une lame définie ou indéfinie géométriquement et des moyens pour la jonction ou l'assemblage des plaques.

9. Dispositif selon la revendication 8, caractérisé en ce qu'il présente une presse d'assemblage avec des moyens de logement et de guidage pour les deux palettes de fixation (1, 2) afin de les guider dans une position (1') symétrique par rapport à leurs surfaces de fixation (49) respectives et de les maintenir dans celle-ci.

10. Dispositif selon l'une des revendications 8 ou 9, caractérisé en ce que les surfaces de fixation (49) des palettes de fixation (1, 2) sont pourvues chacune d'au moins un repère de référence.
